# EUROPEAN PATENT APPLICATION

(11) **EP 4 811 579 A1**
(43) Date of publication of application: **23.09.2026**
(21) Application number: 26157657.3
(22) Date of filing: 10.02.2026
(51) Int. Cl.: H02H 3/02, H02H 3/08, H01H 9/54

(54) **HYBRID SWITCH ASSEMBLY AND CIRCUIT INTERRUPTER INCLUDING THE SAME**

(30) Priority: 17.03.2025 US 202519081273
(71) Applicant: Eaton Intelligent Power Limited, Dublin 4, D04 Y0C2 (IE)
(72) Inventor: Ramamurthy, Shyam, Pittsburgh, 15237 (US); Lichauer, Andrew W., McMurray, 15317 (US)
(74) Representative: Collingwood-Pierce, Alexandra Isobel Seymour

(57) **Abstract**

A hybrid circuit interrupter includes a primary inductor, a mechanical switching element coupled to the primary inductor, and a solid-state switching circuit coupled to the primary inductor and connected in parallel with the mechanical switching element, wherein the solid-state switching circuit is structured and configured to commutate current away from the mechanical switching element during a fault condition, and wherein the solid-state switching circuit includes a secondary inductor, a first number of power electronics elements in series with the secondary inductor, and a second number of power electronics elements structured and configured to regulate current through the mechanical switching element.

## Description

### FIELD OF THE INVENTION:

The disclosed concept relates generally to circuit interrupters, and, in particular, to hybrid circuit interrupters that commutate current during a trip and switching operations.

### BACKGROUND OF THE INVENTION:

Circuit interrupters, such as, for example and without limitation, circuit breakers, are typically used to protect electrical circuitry from damage due to an overcurrent condition, such as an overload condition, a short circuit, or another fault condition, such as an arc fault or a ground fault. Circuit interrupters typically include separable contacts. The separable contacts may be operated either manually by way of an operator handle or automatically in response to a detected fault condition. Typically, such circuit interrupters include an operating mechanism, which is designed to rapidly open the separable contacts, and a trip mechanism, such as a trip unit, which senses a number of fault conditions to trip the separable contacts open automatically. Upon sensing a fault condition, the trip unit trips the operating mechanism to a trip state, which moves the separable contacts to their open position.

When the separable contacts open during a trip, an arc will often form between the separable contacts. Arcing can be detrimental to the circuit interrupter itself and electrical components connected to it. Many techniques have been developed to minimize and extinguish arcing as quickly as possible. However, arcing cannot be completely avoided. Nevertheless, it is beneficial to minimize the effects of arcing during a trip or switching operations.

Hybrid circuit interrupters, such as hybrid circuit breakers, include a mechanical switching element and a power electronics switching element. During normal operating conditions, the current flows through the mechanical switching element and the power electronics element is either in an OFF condition or a condition with almost no current flowing through it. When the circuit interrupter needs to open or trip during a fault condition, the current rises rapidly to a high value. This current through the mechanical switching element needs to be brought to zero by commutating it to the power electronics switching element. In prior art hybrid circuit interrupters, the commutation circuit uses a bridge modulator, capacitor storage elements, and additional semiconductor devices to inject a voltage to reduce the current through the mechanical switching element to zero and regulate the current there. This configuration requires additional large capacitive energy storage elements, large coupled inductors, and power electronics switches with high current ratings.

There is room for improvement in circuit interrupters.

### SUMMARY OF THE INVENTION:

In one embodiment, a hybrid circuit interrupter is provided that includes a primary inductor, a mechanical switching element coupled to the primary inductor, and a solid-state switching circuit coupled to the primary inductor and connected in parallel with the mechanical switching element, wherein the solid-state switching circuit is structured and configured to commutate current away from the mechanical switching element during a fault condition, and wherein the solid-state switching circuit includes a secondary inductor magnetically coupled to the primary inductor, a first number of power electronics elements in series with the secondary inductor, and a second number of power electronics elements structured and configured to regulate current through the mechanical switching element.

In another embodiment, a method of handling a fault condition in a hybrid circuit interrupter that includes a primary inductor, a mechanical switching element coupled to the primary inductor, and a solid-state switching circuit coupled to the primary inductor and connected in parallel with the mechanical switching element. The method includes detecting the fault condition, responsive to detecting the fault condition, commutating current away from the mechanical switching element, wherein the solid-state switching circuit includes a secondary inductor magnetically coupled to the primary inductor, a first number of power electronics elements in series with the secondary inductor, and a second number of power electronics elements, and regulating current through the mechanical switching element using controlled switching of the solid-state switching circuit coupled to the primary inductor and connected in parallel with the mechanical switching element

### BRIEF DESCRIPTION OF THE DRAWINGS:

A full understanding of the invention can be gained from the following description of the preferred embodiments when read in conjunction with the accompanying drawings in which:
FIG. 1 is a schematic diagram of a hybrid circuit interrupter in accordance with an exemplary embodiment of the disclosed concept;
FIG. 2 is a schematic diagram of a solid-state switching circuit forming part of the hybrid circuit interrupter of FIG. 1 according to an exemplary embodiment of the disclosed concept; and
FIG. 3 is a schematic diagram of a solid-state switching circuit forming part of the hybrid circuit interrupter of FIG. 1 according to another, alternative exemplary embodiment of the disclosed concept.

### DETAILED DESCRIPTION OF THE INVENTION:

As used herein, the singular form of "a", "an", and "the" include plural references unless the context clearly dictates otherwise.

As used herein, the statement that two or more parts or components are "coupled" shall mean that the parts are joined or operate together either directly or indirectly, i.e., through one or more intermediate parts or components, so long as a link occurs.

As used herein, "directly coupled" means that two elements are directly in contact with each other.

As used herein, the term "number" shall mean one or an integer greater than one (i.e., a plurality).

Directional phrases used herein, such as, for example and without limitation, top, bottom, left, right, upper, lower, front, back, and derivatives thereof, relate to the orientation of the elements shown in the drawings and are not limiting upon the claims unless expressly recited therein.

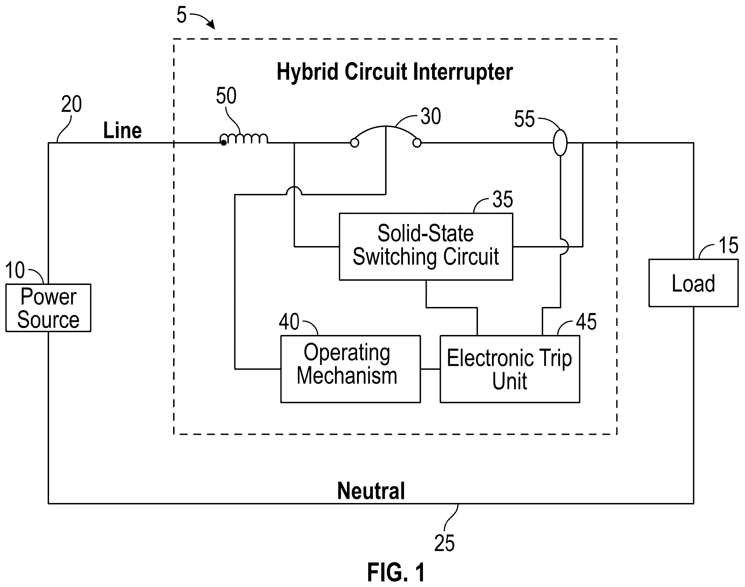

FIG. 1 is a schematic diagram of a hybrid circuit interrupter 5 (e.g., without limitation, a circuit breaker) in accordance with an exemplary embodiment of the disclosed concept. Hybrid circuit interrupter 5 is structured to be electrically connected between a power source 10 (e.g., an AC source such as a phase line of a three phase power system) and a load 14 via LINE and NEUTRAL conductors 20,25. Hybrid circuit interrupter 5 is structured to trip open or switch open to interrupt current flowing between power source 10 and load 15 in the case of a fault condition (e.g., without limitation, an overcurrent condition) to protect load 15, circuitry associated with the load 15, and power source 10

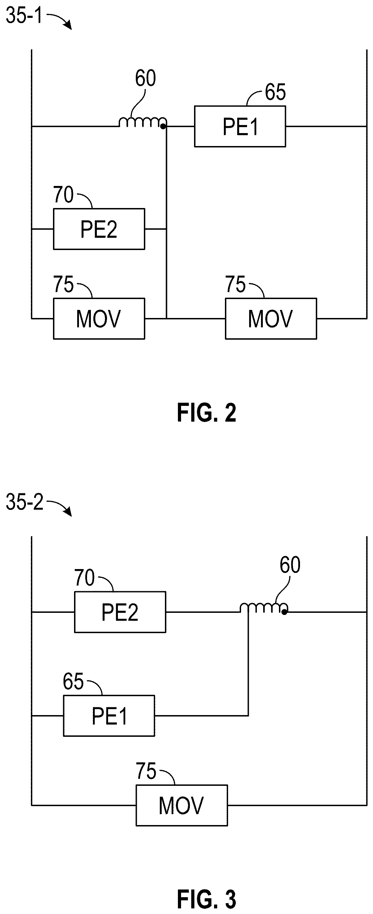

As seen in FIG. 1, hybrid circuit interrupter 5 includes a mechanical switching element 30 including separable contacts, a solid-state switching circuit 35 (examples of which are shown in FIGS. 2 and 3), an operating mechanism 40, an electronic trip unit 45, and a primary inductor 50 having N1 turns. Electronic trip unit 45 is structured to monitor power flowing through hybrid circuit interrupter 5 via a current sensor 55 and/or other sensors and to detect fault conditions based on the power flowing through hybrid circuit interrupter 5. In response to detecting a fault condition, electronic trip unit 45 is structured to output a signal to initiate a trip.

Operating mechanism 40 is structured and configured to cause the separable contacts of mechanical switching element 30 physically separate when a trip or switch action is initiated by the signal output by electronic trip unit 45. Solid state switching circuit 35, which is connected in parallel to mechanical switching element 30, includes a number of power electronics switching elements (e.g., without limitation, insulated-gate bipolar transistors (IGBTs) or metal oxide semiconductor field effect transistors (MOSFETS)) that are structured to turn ON and turn OFF(i.e., open and close) as described herein to allow current to selectively commutate past mechanical switching element 30 while the separable contacts thereof are separated. For example, solid-state switching circuit 35 is structured to allow current to commutate past mechanical switching element 30 for a limited amount of time after the separable contacts are separated in the case of a trip or switching action, or for a limited amount of time before the separable contacts are closed in the case of closing the separable contacts. Commutating current past mechanical switching element 30 reduces the arcing and its detrimental effects. Example embodiments of solid-state switching circuit 35 will be described in more detail hereinafter.

FIG. 2 is a schematic diagram of solid-state switching circuit 35 (labeled 35-1) according to an exemplary embodiment of the disclosed concept. Solid-state switching circuit 35-1 includes a secondary inductor 60 that is magnetically coupled to primary inductor 50. The dot in primary inductor 50 and secondary inductor 60 indicates the coupling and polarity of the inductor. The dot placement is selected such that energy induced in the coupled inductor by current flowing into the dot of primary inductor 50 forces proportional current to leave out of dot of secondary inductor 60. Secondary inductor 60 has N2 turns, wherein N2 is less than or equal to N1. In the exemplary embodiment, N1/N2 is 1.5. Solid-state switching circuit 35-1 further includes a number of first power electronic elements (PE1), labeled 65 in FIG. 2, a number of second power electronic elements (PE2), labeled 70 in FIG. 2, and a number of metal oxide varistors (MOV) 75. In the illustrated exemplary embodiment, Solid-state switching circuit 35-1 incldues two MOVs 75 to limit the voltages on PE2 70. PE1 65 and PE2 70 may each be one or more solid-state switching elements, such as, without limitation, an IGBT or MOSFET in any combination. PE1 65 is connected in series with the entirety of secondary inductor 60 at the lowest tap of secondary inductor 60 and serves as the main power electronics element for solid-state switching circuit 35-1. PE2 70 is connected in parallel with secondary inductor 60 and provides current regulation functionality for solid-state switching circuit 35-1 as described herein. MOV 75 is connected in parallel to the series connection of secondary inductor 60 and PE1 65. MOV 75 provides energy absorption functionality to solid-state switching circuit 35-1 while also providing a conducting current path after PE1 65 and PE2 70 stop conducting as described herein. While providing the conducting current path, MOV 75 clamps any circuit overvoltage to a design selected value. In one particular embodiment of solid-state switching circuit 35-1, PE2 70 may have a voltage and current rating that is less than or equal to the full voltage and current rating of hybrid circuit interrupter 5.

In operation, PE1 65 and PE2 70 will normally be open (PE1 65 and PE2 70 will both be OFF). At normal circuit currents, the voltage induced on secondary inductor 60 is low. In the exemplary embodiment of FIG. 2, PE2 70 may be configured to start conducting at some pre-set voltage level to clamp the voltage across secondary inductor 60 and start building energy in secondary inductor 60. When electronic trip unit 45 detects a fault condition, it will send a signal that causes PE1 65 to turn ON while leaving PE2 70 in an OFF condition. As a result, the fault current will be commutated away from mechanical switching element 30 (bringing the current in mechanical switching element 30 to zero) and to PE1 65. The current in mechanical switching element 30 may, however, go past zero. When this is detected by electronic trip unit 45, it will send a signal that causes PE2 70 to be turned ON to regulate the current in mechanical switching element 30 around a zero value.

FIG. 3 is a schematic diagram of solid-state switching circuit 35 (labeled 35-2) according to an alternative exemplary embodiment of the disclosed concept. Solid-state switching circuit 35-2 includes the same elements as solid-state switching circuit 35-1. However, in solid-state switching circuit 35-2, those elements are arranged in a different topology as described below. In solid-state switching circuit 35-2, PE1 65 is connected to secondary inductor 60 at a tap (N3) other than the highest tap of secondary inductor 60, and as a result, PE1 65 is connected in series with the portion of secondary inductor 60 that is above or upstream of the tap location (N3). PE1 65 serves as the main power electronics element for solid-state switching circuit 35-2. PE2 70 is connected in series at tap location that is higher than the tap location of PE1 65 (e.g., N2). PE2 70 is thus connected in series with the portion of secondary inductor 60 that is above or upstream of this second, higher tap location (for example, the entire secondary inductor 60 as shown in FIG. 3) and provides current regulation functionality for solid-state switching circuit 35-2. In one particular embodiment of solid-state switching circuit 35-2, PE2 70 may have a current rating that is less than or equal to the full current rating of hybrid circuit interrupter 5, but may have a voltage rating that is the full voltage rating of hybrid circuit interrupter 5.

In solid-state switching circuit 35-2, it is more difficult to build inductive energy in PE1 65 and PE2 70 without disturbing the current of the path of mechanical switching element 30. Turning PE1 65 or PE2 70 ON in this topology will commutate current away from the path of mechanical switching element 30 and bring it towards zero. In this topology, however, when a fault is detected by electronic trip unit 45, PE1 65 is turned ON first and when current in the path of mechanical switching element 30 goes past zero to the other direction, PE2 70 is turned ON. Under these conditions, PE1 65 may be turned OFF to regulate the current of the path of mechanical switching element 30 around zero.

In the embodiments described herein, secondary inductor 60 does not transfer voltage, but rather transfers energy via currents. Thus, it does not need to support the flux linkages corresponding to a voltage transfer, and as a result, its size may be smaller. In addition, since the number of turns of secondary inductor 60 is the same as or lower than the number of turns of primary inductor 30, the scheme of the disclosed concept does not have the issues that are associated with current transformers used in prior art configurations, where large overvoltages can occur on the secondary.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. A hybrid circuit interrupter, comprising:
a primary inductor;
a mechanical switching element coupled to the primary inductor; and
a solid-state switching circuit coupled to the primary inductor and connected in parallel with the mechanical switching element, wherein the solid-state switching circuit is structured and configured to commutate current away from the mechanical switching element during a fault condition, and wherein the solid-state switching circuit includes a secondary inductor magnetically coupled to the primary inductor, a first number of power electronics elements in series with the secondary inductor, and a second number of power electronics elements structured and configured to regulate current through the mechanical switching element.

2. The hybrid circuit interrupter according to claim 1, wherein the second number of power electronics elements is connected in parallel with the secondary inductor.

3. The hybrid circuit interrupter according to claim 2, wherein the second number of power electronics elements have a voltage and current rating that is less than or equal to a full voltage and current rating of the hybrid circuit interrupter.

4. The hybrid circuit interrupter according to claim 1, wherein the first number of power electronics elements is connected to the secondary inductor at a first tap location such that the first number of power electronics elements is connected in series with only a portion of the secondary inductor, and wherein the second number of power electronics elements is connected in series with the secondary inductor at a second tap location that is different than the first tap location.

5. The hybrid circuit interrupter according to claim 4, wherein the second tap location is higher than the first tap location.

6. The hybrid circuit interrupter according to claim 4, wherein the second number of power electronics elements have a current rating that is less than or equal to a full current rating of the hybrid circuit interrupter and a voltage rating that is a full voltage rating of the hybrid circuit interrupter.

7. The hybrid circuit interrupter according to claim 1, wherein the primary inductor has a first number of turns (N1), the secondary inductor has a second number of turns (N2), and wherein N1 ≥ N2.

8. The hybrid circuit interrupter according to claim 1, wherein the solid-state switching circuit further includes one or more MOVs connected in parallel to a series connection of the secondary inductor and the first number of power electronics elements.

9. The hybrid circuit interrupter according to claim 1, wherein the secondary inductor is coupled to the primary inductor such that current flowing into a dot of the primary inductor forces a proportional current to flow out of a dot of the secondary inductor.

10. A method of handling a fault condition in a hybrid circuit interrupter that includes a primary inductor, a mechanical switching element coupled to the primary inductor, and a solid-state switching circuit coupled to the primary inductor and connected in parallel with the mechanical switching element, the method comprising:
detecting the fault condition;
responsive to detecting the fault condition, commutating current away from the mechanical switching element, wherein the solid-state switching circuit includes a secondary inductor magnetically coupled to the primary inductor, a first number of power electronics elements in series with the secondary inductor, and a second number of power electronics elements; and
regulating current through the mechanical switching element using controlled switching of the solid-state switching circuit coupled to the primary inductor and connected in parallel with the mechanical switching element.

11. The method according to claim 10, wherein the second number of power electronics elements is connected in parallel with the secondary inductor.

12. The method according to claim 10, wherein the first number of power electronics elements is connected to the secondary inductor at a first tap location such that the first number of power electronics elements is connected in series with only a portion of the secondary inductor, and wherein the second number of power electronics elements is connected in series with the secondary inductor at a second tap location that is different than the first tap location.

13. The method according to claim 12, wherein the second tap location is higher than the first tap location.

14. The method according to claim 10, wherein the primary inductor has a first number of turns (N1), the secondary inductor has a second number of turns (N2), and wherein N1 ≥ N2.

15. The method according to claim 10, wherein the secondary inductor is coupled to the primary inductor such that current flowing into a dot of the primary inductor forces a proportional current to flow out of a dot of the secondary inductor.
